# EUROPEAN PATENT APPLICATION

(11) **EP 3 182 392 A1**
(43) Date of publication of application: **21.06.2017**
(21) Application number: 16739386.7
(22) Date of filing: 11.05.2016
(51) Int. Cl.: G08B 21/06

(54) **DRIVING FATIGUE EARLY WARNING METHOD AND SYSTEM FOR USE IN VEHICLE**

(30) Priority: 19.10.2015 CN 201510680545
(71) Applicant: LE Holdings (Beijing) Co., Ltd., Beijing 100025 (CN); Leauto Intelligent Technology (BEIJING) Co. Ltd, Beijing 100025 (CN)
(72) Inventor: LI, Wenrui, Beijing 100025 (CN); CHEN, Kunsheng, Beijing 100025 (CN); XU, Yong, Beijing 100025 (CN); LIN, Wei, Beijing 100025 (CN); LIU, Peng, Beijing 100025 (CN); LI, Dan, Beijing 100025 (CN); ZOU, Yu, Beijing 100025 (CN)
(74) Representative: Botti, Mario
(86) International application number: PCT/CN2016/081773
(87) International publication number: WO 2017/067152

(57) **Abstract**

The present invention discloses a driver fatigue alert method for a vehicle. The method includes: if a driver fatigue detection device detects driver fatigue information of the present vehicle, then sending the driver fatigue information of the present vehicle to an alert device and a wireless communication device; sending, by the wireless communication device, the driver fatigue information to the outside; and generating, by the alert device, an alert signal according to the driver fatigue information. The present invention further discloses a driver fatigue alert system for a vehicle, where the system includes: a driver fatigue detection device; a wireless communication device communicatively connected with the driver fatigue detection device, configured to send driver fatigue information to the outside wirelessly; and an alert device communicatively connected with the driver fatigue detection device and the wireless communication device. Transport accidents due to fatigue drive can be reduced effectively according to the present invention by detecting and alerting the driver fatigue information, and concurrently sending the driver fatigue information to and alerting the outside.

## Description

This application claims the benefit of Chinese Patent Application No. 201510680545.6, filed with the State Intellectual Property Office of People's Republic of China on October 19, 2015 and entitled "Driver fatigue alert method and system for vehicle", which is hereby incorporated by reference in its entirety.

### FIELD

The present invention relates to the field of traffic security and particularly to a driver fatigue alert method and system for a vehicle.

### BACKGROUND

The traffic and transportation industry in China has developed so rapidly that there are an increasing number of transport accidents on roads, and the data from the traffic department showed that transport accidents due to driver fatigue accounted approximately 20% of the transport accidents and over 40% of serious transport accidents. The transport accidents have brought significant personal and economic costs in China, driver fatigue which is one of major hidden dangers for the transport accidents has gained intense attention from people, and there are also more and more methods for detecting driver fatigue.

A large number of existing advanced vehicles are equipped with driver fatigue alert devices accompanying with the development of vehicle technologies and image processing technologies. Such a device can detect the face of a driver, for example, whether the eyes are closed, the frequency at which the driver yawns, etc., or the duration of driving, and the rotation speed and the yaw angle of an automobile, and if driver fatigue is detected, then the device will alert the driver asking the driver to take a rest.

Although the existing driver fatigue alert is somewhat working to the driver of the vehicle, if the driver of a traveling automobile is driving with fatigue, then the driver may, for example, drive at a delay or drive improperly, thus seriously endangering other surrounding vehicles and living bodies.

### SUMMARY

In order to address the technical problem of failing to alert the outside in the prior art, in an aspect, the present invention provides a driver fatigue alert method for a vehicle, the method including:
if a driver fatigue detection device of the present vehicle detects driver fatigue information of the present vehicle, then sending the driver fatigue information of the present vehicle to an alert device of the present vehicle, and a wireless communication device of the present vehicle;
sending, by the wireless communication device of the present vehicle, the received driver fatigue information of the present vehicle to the outside; and
generating, by the alert device of the present vehicle, an alert signal for the present vehicle according to the received driver fatigue information of the present vehicle.

With the driver fatigue alert method above for a vehicle according to the present invention, not only driver fatigue of the present vehicle can be detected and alerted to, but also the driver fatigue information of the present vehicle can be sent to the outside, so that an alert can be generated when the driver fatigue information is received by a surrounding device, to thereby avoid a potential risk so as to greatly lower the probability of a traffic accident occurring due to driver fatigue.

Furthermore at the same time as or after the alert signal for the present vehicle is generated, the driver fatigue detection device of the present vehicle judges whether a driver has been become drowsy, and if so, then the present vehicle is controlled immediately to decelerate (including stopping the vehicle); otherwise, it is further judged whether the duration of fatigued driving exceeds a predetermined temporal threshold, and if so, then the present vehicle is controlled to decelerate.

With this method, as long as the driver has become drowsy (for example, has closed the eyes) or the duration of fatigued driving exceeds a predetermined temporal threshold (e.g., one hour), the present vehicle will be controlled to decelerate, to thereby avoid the alert signal of the alert device from failing to work on alerting the driver effectively due to excessive fatigue, or a traffic accident from occurring due to a failure to send the alert signal to the outside as a result of malfunction of the alert device.

Preferably, this method further includes: if the wireless communication device of the present vehicle receives traffic safety information from the outside (e.g., failure information or driver fatigue information of a surrounding vehicle, and traveling information from the surrounding vehicle, positional information sent by a surrounding passerby using a terminal, etc.), then sending the driver fatigue information from the surrounding vehicle to the alert device of the present vehicle, and generating the alert signal for the present vehicle.

Thus not only driver fatigue of the present vehicle can be alerted to, but also the driver fatigue information from the outside can be received by the wireless communication device, and the driver can be alerted to driver fatigue of the surrounding vehicle, so that the driver can identify alert information corresponding to different alert signals and further adjust the driving operation as appropriate; and moreover an alert between the respective vehicles can be generated to thereby further secure traffic traveling so as to further lower the number of transport accidents arising from driver fatigue.

In some embodiments of the driver fatigue alert method for a vehicle according to the present invention, the method includes:
if a driver fatigue detection device of the present vehicle detects driver fatigue information of the present vehicle, then sending, by the driver fatigue detection device of the present vehicle, the driver fatigue information of the present vehicle to an alert device of the present vehicle, and a wireless communication device of the present vehicle, and acquiring and sending, by a navigation device of the present vehicle, traveling information of the present vehicle to the wireless communication device of the present vehicle;
sending, by the wireless communication device of the present vehicle, the received driver fatigue information of the present vehicle to the outside together with the traveling information of the present vehicle; and
generating, by the alert device of the present vehicle, an alert signal for the present vehicle according to the received driver fatigue information of the present vehicle.

With this method according to the present invention, the wireless communication device of the present vehicle sends the received driver fatigue information of the present vehicle to the outside together with the traveling information of the present vehicle, so that a surrounding receiver can receive the driver fatigue information of the present vehicle and the traveling information of the present vehicle, and thus the surrounding receiver can take a more effective evading measure.

Furthermore at the same time as or after the alert signal for the present vehicle is generated, the navigation device of the present vehicle provides positional information of available rest areas nearby the present vehicle.

Since the driver may have fatigued and the alert signal can only have the driver clear-headed temporarily, but there may still be a risk of a potential transport accident, at this time the navigation device provides the driver actively with the surrounding rest areas where the driver can relax (e.g., highway service areas, gas stations, and other areas), so that the driver who has driven with fatigue can locate a working rest area where the driver can relax, in such a timely manner that the driver can decide to have a rest immediately according to the positional information of the rest area.

In some embodiments of the driver fatigue alert method for a vehicle according to the present invention, the method further includes: if the wireless communication device of the present vehicle receives traffic safety information from the outside (e.g., failure information or driver fatigue information of a surrounding vehicle, and traveling information from the surrounding vehicle, positional information sent by a surrounding passerby using a terminal, etc.), then:
sending the traffic safety information (e.g., the driver fatigue information here) from the surrounding vehicle to the alert device of the present vehicle, and generating the alert signal for the present vehicle; and
sending the traveling information from the surrounding vehicle to the navigation device of the present vehicle, and analyzing, by the navigation device of the present vehicle, the traveling information from the surrounding vehicle and the traveling information of the present vehicle, and determining and indicating a positional relationship and/or a safety distance between the present vehicle and the surrounding vehicle.

In this embodiment, the traveling information of the surrounding vehicle and the traveling information of the present vehicle is analyzed and compared, and the positional relationship and/or the safety distance between the present vehicle and the surrounding vehicle is determined and indicated, so that the driver can obtain the relative positional relationship between the present vehicle and the surrounding vehicle through the navigation device, and take a pertinent evading measure on an appropriate occasion to thereby secure the driver and avoid interference with and even a hazard to another surrounding vehicle and passerby arising from blind evading due to the absence of a pertinent indicator.

Preferably, after the positional relationship and/or the safety distance between the present vehicle and the surrounding vehicle is determined and indicated, the method further includes:
judging whether the surrounding vehicle is traveling on the same lane as the present vehicle, and if not, then controlling the present vehicle to accelerate or decelerate to evade; otherwise, further judging whether the surrounding vehicle is before or behind the present vehicle;
if the surrounding vehicle is before the present vehicle, then decelerating the present vehicle, or performing adaptive cruise control, or changing the lane to evade; and
if the foreign vehicle is after the present vehicle, then accelerating the present vehicle, or performing adaptive cruise control, or changing the lane to evade.

In fact, if there is a surrounding vehicle being driven with fatigue, then the driver of the present vehicle may also have driven with fatigue, but the alert device may fails, or the driver may be abstracted, so that the driver can not be alerted in a timely manner, so the technical solution according to this embodiment can further make the judgment as to the relative position to thereby take over the vehicle for control as appropriate.

Moreover since different persons have different personal constitution, and they have different periods of time for secured continuous fatigued driving, if a physically weak person is driving the vehicle, then a period of time thereof for secured continuous fatigued driving may actually be less than the predetermined temporal threshold above. In combination with the "temporal threshold" alert solution above, the technical solution according to this embodiment can make up for the problem of late intervention in the "active deceleration if the temporal threshold is exceeded" solution above by firstly taking over the vehicle for control through further making the judgment as to the relative position directly.

In some embodiments of the driver fatigue alert method for a vehicle according to the present invention, after the positional relationship and/or the safety distance between the present vehicle and the surrounding vehicle is determined and indicated, the method further includes:
judging whether the surrounding vehicle is traveling on the same lane as the present vehicle, and if not, then controlling the present vehicle to accelerate or decelerate to evade; otherwise, further judging whether the surrounding vehicle is before or behind the present vehicle;
in a case that the surrounding vehicle is before the present vehicle, if the navigation device of the present vehicle detects that the distance between the present vehicle and the surrounding vehicle is smaller than the safety distance, then starting a brake system of the present vehicle to decelerate the present vehicle, or starting an adaptive cruise system of the present vehicle to perform adaptive cruise control between the present vehicle and the vehicle ahead, or changing the lane, to evade; and
in a case that the surrounding vehicle is behind the present vehicle, then if the navigation device of the present vehicle detects that the distance between the present vehicle and the surrounding vehicle is smaller than the safety distance, then controlling an engine of the present vehicle to accelerate the present vehicle, or starting the adaptive cruise system of the present vehicle to perform adaptive cruise control between the present vehicle and the vehicle behind the present vehicle, or changing the lane, to evade.

The safety distance can be introduced to thereby avoid the vehicle from being taken over blindly or prematurely for control, which would otherwise bother the driver.

In any one of the embodiments above, the wireless communication device includes a Dedicated Short Range Communications (DSRC) protocol enabled wireless transceiver. The support of the DSRC technology can enable a wireless communication distance of 1000 meters in a clear environment and of 300 meters in a urban populated environment without being affected by a dead zone out of sight, visibility, surrounding noise, and other factors in a radiation scope, so that the alert information can be transmitted/received with higher reliability to thereby ensure a higher alert success ratio.

In any one of the embodiments above, the traveling information includes positional information, speed information, acceleration information, yaw angle information, and other information. Thus the surrounding vehicle or present vehicle can have clear knowledge of the relative positional relationship therebetween to thereby take an appropriate evading measure accordingly.

In any one of the embodiments above, the alert signal includes an image and/or audio and/or vibration alert signal, so that alert signals in a number of forms including an image, audio, and vibration can be set, and the user can select as preferred one or more of the alert signals for an alert to thereby satisfy a personalized demand.

In another aspect, a driver fatigue alert system for a vehicle according to an embodiment of the present invention includes:
a driver fatigue detection device configured to detect driver fatigue information of the present vehicle; a wireless communication device communicatively connected with the driver fatigue detection device, configured to send the driver fatigue information received from the driver fatigue detection device to the outside; and an alert device communicatively connected with the driver fatigue detection device, configured to generate an alert signal for the present vehicle according to the driver fatigue information received from the driver fatigue detection device.

In some embodiments of the driver fatigue alert system for a vehicle according to the present invention, the system further includes an evading device connected with the driver fatigue detection device, where at the same time as or after the alert device generates the alert signal for the present vehicle, the driver fatigue detection device judges whether a driver has become drowsy, and if so, then the evading device controls the present vehicle immediately to decelerate; otherwise, the driver fatigue detection device further judges whether duration of fatigued driving exceeds a predetermined temporal threshold, and if so, then the evading device controls the present vehicle to decelerate.

In some embodiments of the driver fatigue alert system for a vehicle according to the present invention, the wireless communication device is further configured to receive driver fatigue information from a surrounding vehicle, and the alert device is further configured to generate the alert signal for the present vehicle according to the driver fatigue information of the surrounding vehicle, received by the wireless communication device.

In some embodiments of the driver fatigue alert system for a vehicle according to the present invention, the evading device is further communicatively connected respectively with the driver fatigue detection device and the wireless communication device, and the evading device is configured to perform corresponding control on an engine and/or a brake system of the present vehicle according to various driver fatigue information received from the driver fatigue detection device and the wireless communication device, where:
if the evading device receives the driver fatigue information from the driver fatigue detection device, then it is judged whether the surrounding vehicle is traveling on the same lane as the present vehicle; and
if not, then the engine and/or the brake system of the present vehicle is controlled to control the present vehicle to accelerate or decelerate to evade;
if so, then it is further judged whether the surrounding vehicle is before or behind the present vehicle, and if the surrounding vehicle is before the present vehicle, then the engine and/or the brake system of the present vehicle is controlled to control the present vehicle to decelerate to evade; and if the foreign vehicle is behind the present vehicle, then the engine and/or the brake system of the present vehicle is controlled to control the present vehicle to accelerate to evade; and
if the evading device receives the driver fatigue information from the wireless communication device, then it is judged whether the driver has closed his/her eyes, and if so, then the engine of the present vehicle is controlled immediately to lower the torsion and decelerate; otherwise, it is further judged whether the duration of fatigued driving exceeds a predetermined temporal threshold, and if so, then the engine of the present vehicle is controlled to lower the torsion and decelerate.

In some embodiments of the driver fatigue alert system for a vehicle according to the present invention, the system further includes a navigation device configured to acquire and send traveling information of the present vehicle to the wireless communication device; and the wireless communication device is configured to send the driver fatigue information received from the driver fatigue detection device to the outside together with the traveling information of the present vehicle.

In some embodiments of the driver fatigue alert system for a vehicle according to the present invention, the navigation device is further configured to provide positional information of available rest areas nearby the present vehicle at the same time as or after the alert device generates the alert signal for the present vehicle.

In some embodiments of the driver fatigue alert system for a vehicle according to the present invention, the wireless communication device is further configured to receive traffic safety information from the outside (e.g., failure information or driver fatigue information of a surrounding vehicle, and traveling information from the surrounding vehicle, positional information sent by a surrounding passerby using a terminal, etc.), to send the traffic safety information (e.g., the driver fatigue information here) from the surrounding vehicle to the alert device for generating the alert signal for the surrounding vehicle, and to send the traveling information from the surrounding vehicle to the navigation device.

The navigation device includes: a positioning unit, an acceleration sensor, and a bus interface, configured to acquire the traveling information of the present vehicle; and a processing unit configured to analyze the traveling information from the surrounding vehicle and the traveling information of the present vehicle, and to determine and indicate a positional relationship and/or a safety distance between the present vehicle and the surrounding vehicle.

In some embodiments of the driver fatigue alert system for a vehicle according to the present invention, the system further includes an evading device communicatively connected with the navigation device, configured:
if the processing unit determines that the surrounding vehicle is not on the same lane as the present vehicle, to control the engine of the present vehicle to accelerate or the brake system of the present vehicle to decelerate to evade, according to the result of judgment;
if the processing unit judges that the surrounding vehicle is on the same lane as the present vehicle, and the surrounding vehicle is before the present vehicle, to control the brake system of the present vehicle to decelerate the present vehicle, or to start an adaptive cruise system of the present vehicle to perform adaptive cruise control between the present vehicle and the vehicle ahead, or to take over a steering wheel for changing the lane to evade, according to the result of judgment;
if the processing unit determines that the surrounding vehicle is on the same lane as the present vehicle, and the surrounding vehicle is behind the present vehicle, to control the engine of the present vehicle to accelerate the present vehicle, or to start the adaptive cruise system of the present vehicle to perform adaptive cruise control between the present vehicle and the surrounding vehicle behind the present vehicle, or to take over the steering wheel for changing the lane to evade, according to the result of judgment.

In some embodiments of the driver fatigue alert system for a vehicle according to the present invention, the system further includes an evading device communicatively connected with the navigation device, configured:
if the processing unit determines that the foreign vehicle is not on the same lane as the present vehicle, to control the engine of the present vehicle to accelerate or the brake system of the present vehicle to decelerate to evade, according to the result of judgment;
if the processing unit determines that the surrounding vehicle is on the same lane as the present vehicle, the surrounding vehicle is before the present vehicle, and the distance between the present vehicle and the surrounding vehicle is smaller than a safety distance, to control the brake system of the present vehicle to decelerate the present vehicle, or to start an adaptive cruise system of the present vehicle to perform adaptive cruise control between the present vehicle and the vehicle ahead, or to take over a steering wheel for changing the lane to evade, according to the result of judgment;
if the processing unit determines that the surrounding vehicle is on the same lane as the present vehicle, the surrounding vehicle is after the present vehicle, and the distance between the present vehicle and the surrounding vehicle is smaller than the safety distance, to control the engine of the present vehicle to accelerate the present vehicle, or to start the adaptive cruise system of the present vehicle to perform adaptive cruise control between the present vehicle and the surrounding vehicle behind the present vehicle, or to take over the steering wheel for changing the lane to evade, according to the result of judgment.

The vehicle according to any one of the embodiments above includes an automobile, a boat, and an aircraft.

With the driver fatigue alert method and system for a vehicle according to the present invention, the vehicle can not only alert the driver thereof but also alert a surrounding vehicle upon detecting that the driver is driving with fatigue, and alike the vehicle can detect a driver fatigue condition of the driver of the surrounding vehicle, so that both the drivers of the present vehicle and the surrounding vehicle can take a corresponding measure to evade or leave from the vehicles endangering them.

### BRIEF DESCRIPTION OF THE DRAWINGS

Fig.1 illustrates a flow chart of a driver fatigue alert method for a vehicle according to an embodiment of the present invention;
Fig.2 illustrates a flow chart of a driver fatigue alert method for a vehicle according to another embodiment of the present invention;
Fig.3 illustrates a flow chart of a driver fatigue alert method for a vehicle according to a further embodiment of the present invention;
Fig.4 illustrates a schematic diagram of a driver fatigue alert system for a vehicle according to an embodiment of the present invention;
Fig.5 illustrates a schematic diagram of a driver fatigue alert system for a vehicle according to another embodiment of the present invention;
Fig.6 illustrates a schematic diagram of a driver fatigue alert system for a vehicle according to a further embodiment of the present invention; and
Fig.7 illustrates a schematic diagram of a driver fatigue alert system for a vehicle according to a still further embodiment of the present invention.

### DETAILED DESCRIPTION

In order to make the objects, technical solutions, and advantages of the present invention more apparent, the present invention will be described below in further details with reference to the drawings and particular embodiments thereof. Although the exemplary embodiments of the present invention are illustrated in the drawings, it shall be appreciated that the present invention can be embodied in various forms but will not be limited to the embodiments described here. On the contrary, these embodiments are provided in order to enable thorough understanding of the present invention and to enable the full scope of the present invention to be conveyed to those skilled in the art.

Some terms as used in the description and the claims refer to particular components. Those skilled in the art shall appreciate that the same component may be denominated by hardware manufacturers using different names. The components may not be distinguished in the description and the claims using their different names, but they will be distinguished as to their functional differences. The words "include" and "comprise" as referred to throughout the description and the claims are defined as open words, so they shall be understood as "include (comprise) but will not be limited to". Preferred embodiments of this application will be described later in the description, but the description will be given for the purpose of describing a general principle of this application but not intended to limit the scope of this application. The scope of the invention as claimed shall be as defined in the appended claims.

In view of this, the present invention proposes a driver fatigue alert method and system for a vehicle, which can be applicable to an In-Vehicle Infotainment (IVI), a car networking server, a mobile terminal, etc., where the vehicle to which the method and system can be applicable includes but will not be limited to a motored vehicle, a boat, an airplane, an aircraft, a bike, an electric vehicle, or another vehicle.

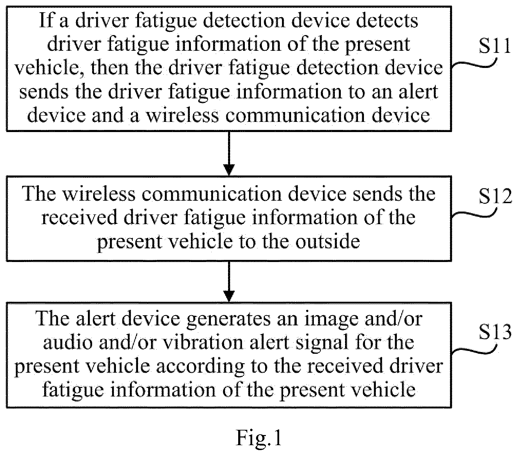

As illustrated in Fig.1, a driver fatigue alert method for a vehicle according to an embodiment of the present invention includes:
In the operation S11, if a driver fatigue detection device of the present vehicle detects driver fatigue information of the present vehicle, then the driver fatigue detection device sends the driver fatigue information of the present vehicle to an alert device of the present vehicle, and a wireless communication device of the present vehicle.
In the operation S12, the wireless communication device of the present vehicle sends the received driver fatigue information of the present vehicle to the outside.
In the operation S13, the alert device of the present vehicle generates an alert signal for the present vehicle according to the received driver fatigue information of the present vehicle.

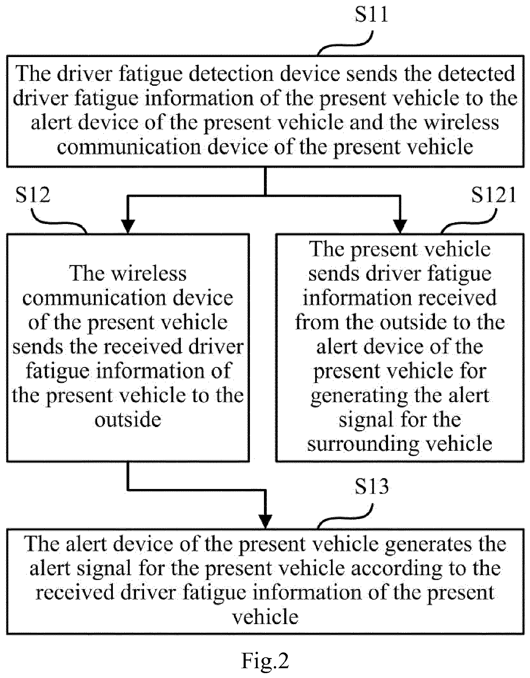

As illustrated in Fig.2, the driver fatigue alert method for a vehicle according to an embodiment of the present invention further includes the operation S121 in which the wireless communication device further receives driver fatigue information from the outside and sends the received driver fatigue information from outside to the alert device accordingly.

In the embodiment above, the wireless communication device, for example, includes a DSRC communication protocol enabled wireless transceiver which can broadcast the driver fatigue information in the form of a DSRC signal in order for a timely and working alert for a surrounding vehicle.

Particularly the driver fatigue detection device can be a detection device detecting a facial expression (e.g., eye closing, a yawn frequency, etc.), a detection device detecting a heart rate, or a detection device detecting the rotation angle of a steering wheel, or the frequency at which an accelerator and/or a brake pedal is accessed, etc., and in general, the driver fatigue detection device according to the present invention can be any one of the detection devices in the prior art.

The alert device includes a speaker unit and/or a vibration unit and/or a display unit, where the speaker unit alerts a driver audibly through a beeper, a horn, or another general device; the vibration unit can be installed on a driver seat, a steering wheel, or any site that can be touched directly by the driver, and the vibration unit shall not vibrate excessively so as not to interfere with normal driving; and the display unit alerts the driver intuitively in the form of an indicating lamp (for example, a LED lamp is lighten or flashing).

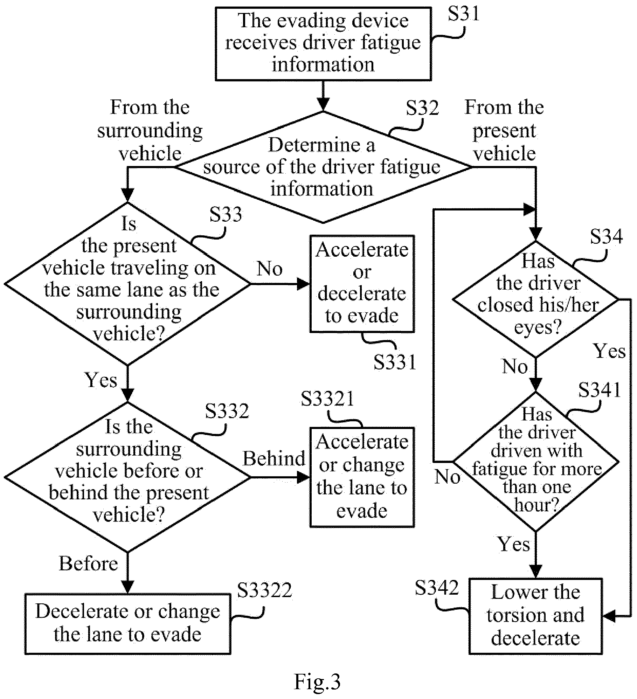

As illustrated in Fig.3, a driver fatigue alert method for a vehicle according to an embodiment of the present invention further includes:
S31. An evading device receives various driver fatigue information from the driver fatigue detection device and the wireless communication device;
S32. It is judged whether the received driver fatigue information is from the driver fatigue detection device or the wireless communication device; and
S33. If the driver fatigue information received by the avoidance device is from the driver fatigue detection device, then it is judged whether the surrounding vehicle is traveling on the same lane as the present vehicle.
S331. If it is determined that the surrounding vehicle is not traveling on the same lane as the present vehicle, then an engine and/or a brake system of the present vehicle is controlled to control the present vehicle to accelerate or decelerate to evade from the surrounding vehicle.
S332. If it is determined that the surrounding vehicle is traveling on the same lane as the present vehicle, then it is further judged that the surrounding vehicle is before or behind the present vehicle.
S3321. If the surrounding vehicle is behind the present vehicle, then the engine and/or the brake system of the present vehicle is controlled to control the present vehicle to accelerate to evade.
S3322. If the surrounding vehicle is before the present vehicle, then the engine and/or the brake system of the present vehicle is controlled to control the present vehicle to decelerate to evade.
S34. If the driver fatigue information received by the avoidance device is from the wireless communication device, then it is judged whether the driver has closed his/her eyes.
S341. If it is determined that the driver has not closed his/her eyes, then it is further judged whether the duration of fatigued driving exceeds a predetermined temporal threshold, and if so, then the engine of the present vehicle is controlled to lower a torsion and decelerate; and
S342. If it is determined that the driver has closed his/her eyes, then the engine of the present vehicle is controlled immediately to lower the torsion and decelerate.

Deceleration of the vehicle in the embodiment above can alternatively be enabled by a Brake Override System (BOS) or an Autonomous Emergency Braking (AEB) system of the vehicle. The predetermined temporal threshold can be customized, for example, as one hour.

In some embodiments, if the driver fatigue detection device detects the driver fatigue information of the present vehicle, then the driver fatigue detection device sends the driver fatigue information to the alert device and the wireless communication device;
The navigation device sends traveling information of the present vehicle to the wireless communication device;
The wireless communication device sends the driver fatigue information of the present vehicle to the outside together with the traveling information of the present vehicle; and
The alert device generates an image and/or audio and/or vibration alert signal according to the received driver fatigue information of the present vehicle, and provides information about surrounding available rest areas using the navigation device.

The traveling information in the embodiment above includes positional information, speed information, acceleration information, and yaw angle information of the present vehicle, and the navigation device reads signal data, a user preset destination, and other information over a CAN bus of the present vehicle using the GPS/GNSS, or a g-sensor, to obtain the positional information, the speed information, driving direction information, a route, and the destination position of the present vehicle, and passes these information to the wireless communication device in a particular data format.

In the embodiment, if the driver is driving with fatigue, then the navigation device provides information about hotels, highway service areas, and other rest areas nearby the present vehicle.

In some embodiments, if the driver fatigue detection device of the present vehicle detects the driver fatigue information of the present vehicle, then the driver fatigue detection device sends the driver fatigue information of the present vehicle to the alert device of the present vehicle and the wireless communication device of the present vehicle, and the navigation device of the present vehicle acquires and sends the traveling information of the present vehicle to the wireless communication device of the present vehicle;
The wireless communication device of the present vehicle sends the received driver fatigue information of the present vehicle to the outside together with the traveling information of the present vehicle; and
The alert device of the present vehicle generates the alert signal for the present vehicle according to the received driver fatigue information of the present vehicle.

Further to the embodiment above, the navigation device of the present vehicle provides positional information of the available rest areas nearby the present vehicle at the same time as or after the alert device of the present vehicle generates the alert signal for the present vehicle according to the received driver fatigue information of the present vehicle.

In an embodiment of the driver fatigue alert method for a vehicle according to the present invention, the method includes:
If the wireless communication device of the present vehicle receives the driver fatigue information from the surrounding vehicle and traveling information from the surrounding vehicle, then:
   The driver fatigue information from the surrounding vehicle is sent to the alert device of the present vehicle, for generating the alert signal for the present vehicle; and
   The traveling information from the surrounding vehicle is sent to the navigation device of the present vehicle, and the navigation device of the present vehicle analyzes the traveling information from the surrounding vehicle and the traveling information of the present vehicle, and determines and indicates a positional relationship and/or a safety distance between the present vehicle and the surrounding vehicle.

After the positional relationship and/or the safety distance between the present vehicle and the surrounding vehicle are determined and indicated, the method further includes:
It is judged whether the surrounding vehicle is traveling on the same lane as the present vehicle, and if not, then controlling the present vehicle to accelerate or decelerate to evade; otherwise, it is further judged whether the surrounding vehicle is before or behind the present vehicle;
If the surrounding vehicle is before the present vehicle, then the brake system of the present vehicle is started to decelerate the present vehicle, or an adaptive cruise system of the present vehicle is started to perform adaptive cruise control between the present vehicle and the vehicle ahead, or to change the lane, to evade; and
If the surrounding vehicle is behind the present vehicle, then the engine of the present vehicle is controlled to accelerate the present vehicle, or the adaptive cruise system of the present vehicle is started to perform adaptive cruise control between the present vehicle and the vehicle behind the present vehicle, or to change the lane, to evade.

Alternatively after the positional relationship and/or the safety distance between the present vehicle and the surrounding vehicle are determined and indicated, the method further includes:
It is judged whether the surrounding vehicle is traveling on the same lane as the present vehicle, and if not, then controlling the present vehicle to accelerate or decelerate to evade; otherwise, it is further judged whether the surrounding vehicle is before or behind the present vehicle;
If the surrounding vehicle is before the present vehicle, then if the navigation device of the present vehicle detects that the distance between the present vehicle and the surrounding vehicle is smaller than the safety distance, then the brake system of the present vehicle is started to decelerate the present vehicle, or an adaptive cruise system of the present vehicle is started to perform adaptive cruise control between the present vehicle and the vehicle ahead, or to change the lane, to evade; and
If the surrounding vehicle is after the present vehicle, then if the navigation device of the present vehicle detects that the distance between the present vehicle and the surrounding vehicle is smaller than the safety distance, then the engine of the present vehicle is controlled to accelerate the present vehicle, or the adaptive cruise system of the present vehicle is started to perform adaptive cruise control between the present vehicle and the surrounding vehicle behind the present vehicle, or to change the lane, to evade.

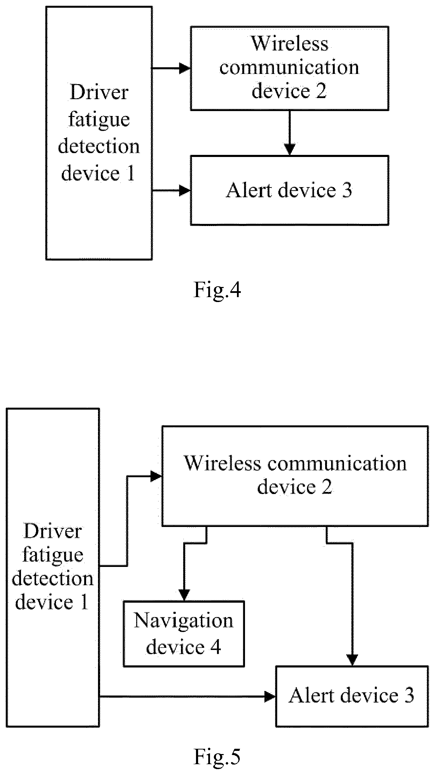

As illustrated in Fig.4, a driver fatigue alert system according to an embodiment of the present invention includes:
A driver fatigue detection device 1 configured to acquire driver fatigue information;
A DSRC enabled wireless communication device 2 communicatively connected with the driver fatigue detection device 1, configured to send the driver fatigue information from the driver fatigue detection device to the outside wirelessly; and
An alert device 3 communicatively connected with the driver fatigue detection device 1 and the wireless communication device 2, configured to generate an alert signal according to the driver fatigue information received from the driver fatigue detection device 1.

The wireless communication device 2 is further configured to receive driver fatigue information from the outside, and the alert device 3 is configured to alert according to the driver fatigue information received from the wireless communication device 2.

In the embodiment above, the driver fatigue device 1 can determine in real time whether the driver is driving with fatigue, where the device detects in real time a driver fatigue condition of the vehicle, and if there is a fatigue condition occurring where the driver closes his/her eyes, yawns frequently, etc., then the driver fatigue alert information is generated and sent to the wireless communication device 2 and the alert device 3; and moreover a Doppler radar or another physiological detection device can further be used to acquire a heart beat, breath, and other data of the driver while driving in a non-contact manner to determine a mental state of the driver.

The wireless communication device 2 can receive the driver fatigue alert information and broadcast the driver fatigue alert information; the wireless communication device can further receive the driver fatigue alert information broadcast by a wireless communication device of the surrounding vehicle and transmit the analytical result from the surrounding vehicle respectively to the alert device and a navigation device; the wireless communication device includes an RF chip, an antenna, and other components, and supports the DSRC technology and can enable a wireless communication distance of 1000 meters in a clear environment and of 300 meters in a urban populated environment without being affected by a dead zone out of sight, visibility, surrounding noise, and other factors in a radiation scope; and the wireless communication device can encapsulate the driver fatigue information, and the traveling information of the vehicle into a data packet in the DSRC format. In hardware, the wireless communication device includes a microprocessor for handling DSRC communication, and peripheral circuits thereof; and in software, the device includes a full suit of communication protocol stack software supporting DSRC technology to encapsulate application data (e.g., driver fatigue data, traveling information of the vehicle, etc.) into a standard DSRC data packet, or to process data received from the surrounding vehicle, and to parse the data for the corresponding application data.

The alert device 3 can receive the driver fatigue alert information and generate the alert; and the alert device can further receive the driver fatigue alert information, received by the wireless communication device, broadcasted from the wireless communication device of the surrounding vehicle. The alert device generally alerts the driver intuitively on an LED screen and/or in the form of an audio alert and/or a vibration alert in combination, where the alert includes both an alert to driver fatigue of the present vehicle and an alert to driver fatigue of another surrounding vehicle.

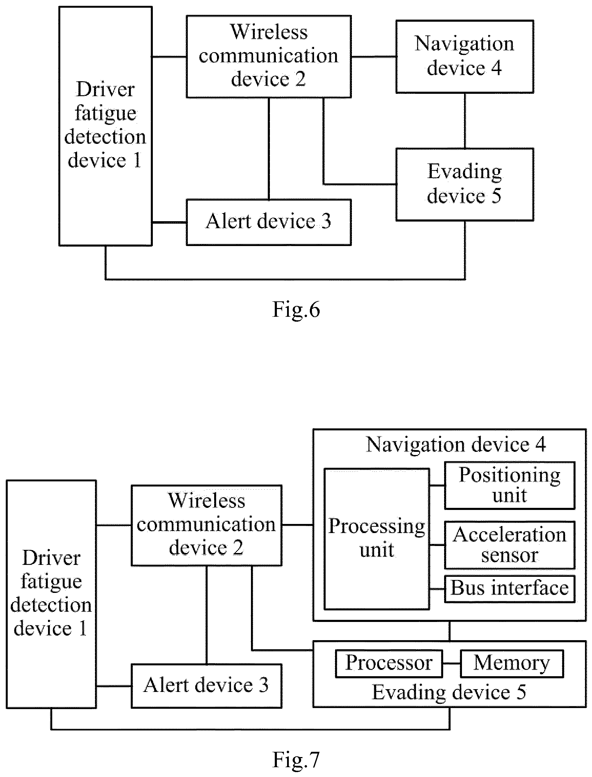

As illustrated in Fig.5, a navigation device is introduced to the system in Fig.4. For example, the navigation device 4 includes (as illustrated in Fig.7):
An acceleration sensor configured to determine the traveling direction of the vehicle, a bus interface configured to read state information of the vehicle;
A positioning unit configured to obtain traveling information of the present vehicle;
A processing unit configured to receive traveling information of the outside (i.e., the traveling information of the surrounding vehicle), and to calculate the relative positional relationship between the present vehicle and the surrounding vehicle; and
A display unit configured to display the relative positional relationship between the present vehicle and the surrounding vehicle.

The navigation device 4 can transmit the positional information of the vehicle to the wireless communication device for display of the relative positional relationship between the present vehicle and the surrounding vehicle. The device is not only configured for route navigation but also primarily configured to obtain current position of the vehicle, the speed, route and destination of the vehicle, and other information through the GPS/GNSS or a g-sensor, or by reading the information over the CAN bus of the vehicle without any limitation thereto. Also the driver fatigue information is obtained, and if the owner of the present vehicle is driving with fatigue, then information about nearby hotels, highway service areas, and other rest areas will be displayed.

In this embodiment, the wireless communication device 2 includes, for example, a control device communicatively connected with the driver fatigue detection device, the processing unit, and the alert device, and a DSRC communication protocol enabled wireless transceiver connected with the control device. The control device is configured to encapsulate the traveling information of the present vehicle and the driver fatigue information of the present vehicle into a DSRC data packet, and to parse a DSRC data packet from the outside for the traveling information of the surrounding vehicle and the driver fatigue information of the surrounding vehicle.

In Fig.6, an evading device is further introduced to the system in Fig.5. The evading device can control automatically the vehicle to evade, according to the driver fatigue information received by the alert device.

The evading device can include but will not be limited to a memory and a processor, where the memory is configured to store instructions for execution, and the processor is configured to read the instructions in the memory and to control the vehicle to perform corresponding actions, e.g., accelerating, decelerating, lowering the torsion, changing the lane, etc. Moreover the evading device can alternatively be integrated into a control device in the navigation device or IVI, or embodied separately as illustrated in Fig.7.

The evading device 5 is communicatively connected respectively with the driver fatigue detection device 1, and the navigation device 4 (the processor of the evading device 5 exchanges data with the processing unit of the navigation device 4), and the evading device is configured to control the engine and/or the brake system of the present vehicle according to the various driver fatigue information detected by the driver fatigue detection device and received by the wireless communication device, where:
If the evading device 5 receives the driver fatigue information from the driver fatigue detection device 1, then it is judged whether the surrounding vehicle is traveling on the same lane as the present vehicle; and
If not, then the engine and/or the brake system of the present vehicle is controlled to control the present vehicle to accelerate or decelerate to evade;
If so, then it is further judged whether the surrounding vehicle is before or behind the present vehicle, and if the surrounding vehicle is before the present vehicle, then the engine and/or the brake system of the present vehicle is controlled to control the present vehicle to decelerate to evade; and if the surrounding vehicle is behind the present vehicle, then the engine and/or the brake system of the present vehicle is controlled to control the present vehicle to accelerate to evade; and
If the evading device 5 receives the driver fatigue information from the wireless communication device 2, then it is judged whether the driver has closed his/her eyes, and if so, then the engine of the present vehicle is controlled immediately to lower the torsion and decelerate; otherwise, it is further judged whether the duration of fatigued driving exceeds a predetermined temporal threshold, and if the duration of fatigued driving exceeds the predetermined temporal threshold, then the engine of the present vehicle is controlled to lower the torsion and decelerate.

The evading device 5 is further configured to start a lock device or an alarm lamp of emergency stop, or to start an ACC system to plan a route again for adaptive cruise control, according to the driver fatigue information received by the alert device if the alert device is generating a lasting alert but there is no response from the driver (the response, for example, by disabling the alert of the alert device and taking a corresponding evading measure).

Furthermore, a safety distance can be introduced to thereby avoid the vehicle from being taken over blindly or prematurely for control, which would otherwise bother the driver. Particularly:
In this embodiment, the system includes the evading device communicatively connected with the processing unit of the navigation device, where the evading device is configured:
   If the processing unit determines that the surrounding vehicle is not on the same lane as the present vehicle, to control the present vehicle to accelerate or decelerate to evade, according to the result of judgment;
   If the processing unit determines that the surrounding vehicle is on the same lane as the present vehicle, the surrounding vehicle is before the present vehicle, and the distance between the present vehicle and the surrounding vehicle is smaller than the safety distance, to decelerate the present vehicle or to perform adaptive cruise control thereon or to change the lane thereof to evade, according to the result of judgment;
   If the processing unit judges that the surrounding vehicle is on the same lane as the present vehicle, the foreign vehicle is behind the present vehicle, and the distance between the present vehicle and the surrounding vehicle is smaller than the safety distance, to accelerate the present vehicle or to perform adaptive cruise control thereon or to change the lane thereof to evade, according to the result of judgment.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

Several preferred embodiments of the invention have been illustrated and described above, but as described above, it shall be appreciated that the invention will not be limited to the forms disclosed here, and the present invention here shall not be construed as precluding other embodiments of the invention, but can be applicable to various other combinations, modifications and environments, and can be modified in light of the teaching above or the skills or knowledge in the art without departing from the scope of the present invention here. The modifications and variations made by those skilled in the art without departing from the spirit and scope of the invention shall fall into the scope of the claims appended to the invention.

## Claims

1. A driver fatigue alert method for a vehicle, comprising:
if a driver fatigue detection device of a present vehicle detects driver fatigue information of the present vehicle, then sending the driver fatigue information of the present vehicle to an alert device of the present vehicle, and a wireless communication device of the present vehicle;
sending, by the wireless communication device of the present vehicle, the received driver fatigue information of the present vehicle to outside; and
generating, by the alert device of the present vehicle, an alert signal for the present vehicle according to the received driver fatigue information of the present vehicle.

2. The driver fatigue alert method for a vehicle according to claim 1, wherein at a same time as or after the alert signal for the present vehicle is generated, the driver fatigue detection device of the present vehicle judges whether a driver has become drowsy, and if so, then the present vehicle is controlled immediately to decelerate; otherwise, it is further judged whether a duration of fatigued driving exceeds a predetermined temporal threshold, and if the duration of fatigued driving exceeds the predetermined temporal threshold, then the present vehicle is controlled to decelerate.

3. The driver fatigue alert method for a vehicle according to claim 1, wherein the method further comprises: if the wireless communication device of the present vehicle receives driver fatigue information from a surrounding vehicle, then sending the driver fatigue information from the surrounding vehicle to the alert device of the present vehicle, and generating an alert signal for the surrounding vehicle.

4. A driver fatigue alert method for a vehicle, comprising:
if a driver fatigue detection device of the present vehicle detects driver fatigue information of a present vehicle, then sending, by the driver fatigue detection device of the present vehicle, the driver fatigue information of the present vehicle to an alert device of the present vehicle, and a wireless communication device of the present vehicle, and acquiring and sending, by a navigation device of the present vehicle, traveling information of the present vehicle to the wireless communication device of the present vehicle;
sending, by the wireless communication device of the present vehicle, the received driver fatigue information of the present vehicle to outside together with the traveling information of the present vehicle; and
generating, by the alert device of the present vehicle, an alert signal for the present vehicle according to the received driver fatigue information of the present vehicle.

5. The driver fatigue alert method for a vehicle according to claim 4, wherein at a same time as or after the alert device of the present vehicle generates the alert signal for the present vehicle according to the received driver fatigue information of the present vehicle, the navigation device of the present vehicle provides positional information of available rest areas nearby the present vehicle.

6. The driver fatigue alert method for a vehicle according to claim 4, wherein at a same time as or after the alert signal for the present vehicle is generated, the driver fatigue detection device of the present vehicle judges whether a driver has become drowsy, and if so, then the present vehicle is controlled immediately to decelerate; otherwise, it is further judged whether a duration of fatigued driving exceeds a predetermined temporal threshold, and if the duration of fatigued driving exceeds the predetermined temporal threshold, then the present vehicle is controlled to decelerate.

7. The driver fatigue alert method for a vehicle according to claim 4, wherein the method comprises:
if the wireless communication device of the present vehicle receives driver fatigue information from a surrounding vehicle and traveling information from the foreign vehicle, then:
sending the driver fatigue information from the surrounding vehicle to the alert device of the present vehicle, and generating the alert signal for the present vehicle; and
sending the traveling information from the surrounding vehicle to the navigation device of the present vehicle, and analyzing, by the navigation device of the present vehicle, the traveling information from the surrounding vehicle and the traveling information of the present vehicle, and determining and indicating a positional relationship and/or a safety distance between the present vehicle and the surrounding vehicle.

8. The driver fatigue alert method for a vehicle according to claim 7, wherein after the positional relationship and/or the safety distance between the present vehicle and the surrounding vehicle is determined and indicated, the method further comprises:
judging whether the surrounding vehicle is traveling on a same lane as the present vehicle, and if not, then controlling the present vehicle to accelerate or decelerate to evade; otherwise, further judging whether the surrounding vehicle is before or behind the present vehicle;
if the surrounding vehicle is before the present vehicle, then decelerating the present vehicle, or performing adaptive cruise control, or changing the lane to evade; and
if the foreign vehicle is behind the present vehicle, then accelerating the present vehicle, or performing adaptive cruise control, or changing the lane to evade.

9. The driver fatigue alert method for a vehicle according to claim 7, wherein after the positional relationship and/or the safety distance between the present vehicle and the surrounding vehicle is determined and indicated, the method further comprises:
judging whether the surrounding vehicle is traveling on a same lane as the present vehicle, and if not, then controlling the present vehicle to accelerate or decelerate to evade; otherwise, further judging whether the surrounding vehicle is before or behind the present vehicle;
if the foreign vehicle is before the present vehicle, then if the navigation device of the present vehicle detects that a distance between the present vehicle and the foreign vehicle is smaller than the safety distance, then decelerating the present vehicle, or performing adaptive cruise control, or changing the lane to evade; and
if the foreign vehicle is behind the present vehicle, then if the navigation device of the present vehicle detects that the distance between the present vehicle and the surrounding vehicle is smaller than the safety distance, then accelerating the present vehicle, or performing adaptive cruise control, or changing the lane to evade.

10. The driver fatigue alert method for a vehicle according to any one of claims 1 to 9, wherein the wireless communication device comprises a Dedicated Short Range Communications, DSRC, communication protocol enabled wireless transceiver.

11. The driver fatigue alert method for a vehicle according to any one of claims 1 to 9, wherein the alert signal comprises image and/or audio and/or vibration alert signal.

12. The driver fatigue alert method for a vehicle according to any one of claims 4 to 9, wherein the travelling information comprises positional information, speed information, acceleration information, and yaw angle information.

13. The driver fatigue alert method for a vehicle according to any one of claims 1 to 9, wherein the vehicle comprises an automobile, a boat, and an aircraft.

14. A driver fatigue alert system for a vehicle, comprising:
a driver fatigue detection device;
a wireless communication device communicatively connected with the driver fatigue detection device, configured to send the driver fatigue information received from the driver fatigue detection device to outside; and
an alert device communicatively connected with the driver fatigue detection device, configured to generate an alert signal for the present vehicle according to the driver fatigue information received from the driver fatigue detection device.

15. The driver fatigue alert system for a vehicle according to claim 14, further comprising an evading device connected with the driver fatigue detection device, wherein at a same time as or after the alert device generates the alert signal for the present vehicle, the driver fatigue detection device judges whether a driver has become drowsy, and if so, then the evading device controls the present vehicle immediately to decelerate; otherwise, the driver fatigue detection device further judges whether a duration of fatigued driving exceeds a predetermined temporal threshold, and if so, then the evading device controls the present vehicle to decelerate.

16. The driver fatigue alert system for a vehicle according to claim 14, wherein the wireless communication device is further configured to receive driver fatigue information from a surrounding vehicle, and the alert device is further configured to generate an alert signal for the surrounding vehicle according to the driver fatigue information of the surrounding vehicle, received by the wireless communication device.

17. The driver fatigue alert system for a vehicle according to claim 14, wherein the system further comprises a navigation device communicatively connected with the wireless communication device, configured to acquire and send traveling information of the present vehicle to the wireless communication device; and the wireless communication device is configured to send the driver fatigue information received from the driver fatigue detection device to the outside together with the traveling information of the present vehicle.

18. The driver fatigue alert system for a vehicle according to claim 17, wherein the navigation device is further configured to provide positional information of available rest areas nearby the present vehicle at a same time as or after the alert device generates the alert signal for the present vehicle.

19. The driver fatigue alert system for a vehicle according to claim 17, wherein the wireless communication device is further configured to receive driver fatigue information from a surrounding vehicle and traveling information from the surrounding vehicle, to send the driver fatigue information from the surrounding vehicle to the alert device for generating the alert signal for the surrounding vehicle, and to send the traveling information from the surrounding vehicle to the navigation device; and
the navigation device comprises: a positioning unit, an acceleration sensor, and a bus interface, configured to acquire the traveling information of the present vehicle;
a processing unit configured to analyze the traveling information from the surrounding vehicle and the traveling information of the present vehicle, and to determine a positional relationship and/or a safety distance between the present vehicle and the foreign vehicle; and
a display configured to display the positional relationship and/or the safety distance between the present vehicle and the foreign vehicle.

20. The driver fatigue alert system for a vehicle according to claim 19, further comprising an evading device communicatively connected with the processing unit of the navigation device, configured:
if the processing unit determines that the surrounding vehicle is not on a same lane as the present vehicle, to control the present vehicle to accelerate or decelerate to evade, according to a result of judgment;
if the processing unit determines that the surrounding vehicle is on the same lane as the present vehicle, and the surrounding vehicle is before the present vehicle, to decelerate the present vehicle or to perform adaptive cruise control or to change the lane to evade, according to the result of judgment; and
if the processing unit determines that the surrounding vehicle is on the same lane as the present vehicle, and the surrounding vehicle is behind the present vehicle, to accelerate the present vehicle or to perform adaptive cruise control or to change the lane to evade, according to the result of judgment.

21. The driver fatigue alert system for a vehicle according to claim 19, further comprising an evading device communicatively connected with the processing unit of the navigation device, configured:
if the processing unit determines that the surrounding vehicle is not on a same lane as the present vehicle, to control the present vehicle to accelerate or decelerate to evade, according to a result of judgment;
if the processing unit determines that the surrounding vehicle is on the same lane as the present vehicle, the surrounding vehicle is before the present vehicle, and a distance between the present vehicle and the surrounding vehicle is smaller than a safety distance, to decelerate the present vehicle or to perform adaptive cruise control thereon or to change the lane thereof to evade, according to the result of judgment; and
if the processing unit judges that the surrounding vehicle is on the same lane as the present vehicle, the foreign vehicle is behind the present vehicle, and the distance between the present vehicle and the surrounding vehicle is smaller than the safety distance, to accelerate the present vehicle or to perform adaptive cruise control thereon or to change the lane thereof to evade, according to the result of judgment.

22. The driver fatigue alert system for a vehicle according to any one of claims 14 to 21, wherein the wireless communication device comprises a Dedicated Short Range Communications, DSRC, communication protocol enabled wireless transceiver.

23. The driver fatigue alert system for a vehicle according to any one of claims 14 to 21, wherein the alert signal comprises image and/or audio and/or vibration alert signal.

24. The driver fatigue alert system for a vehicle according to any one of claims 17 to 21, wherein the travelling information comprises positional information, speed information, acceleration information, and yaw angle information.

25. The driver fatigue alert system for a vehicle according to any one of claims 14 to 21, wherein the vehicle comprises an automobile, a boat, and an aircraft.
